# EUROPEAN PATENT SPECIFICATION

(11) **EP 2 601 826 B1**
(45) Date of publication and mention of the grant of the patent: **09.07.2014**
(21) Application number: 11192530.1
(22) Date of filing: 08.12.2011
(51) Int. Cl.: A01D 34/416

(54) **A spool cassette, a cutting head for a string trimmer and a string trimmer**
Spulenkassette, Schneidkopf für einen Streifenschneider und Streifenschneider
Cassette de bobine, tête coupante pour tondeuse à fil et tondeuse à fil

(43) Date of publication of application: 12.06.2013
(73) Proprietor: Black & Decker Inc., Newark, Delaware 19711 (US)
(72) Inventor: Stones, Kevin, Bishop Auckland, Durham DL14 6AE (GB)
(74) Representative: Stentiford, Andrew Charles

(56) References cited:
- EP-A1- 0 676 126
- US-A- 4 285 127
- US-A- 4 493 151

## Description

The present invention relates to a spool cassette, a cutting head for a string trimmer and a string trimmer.

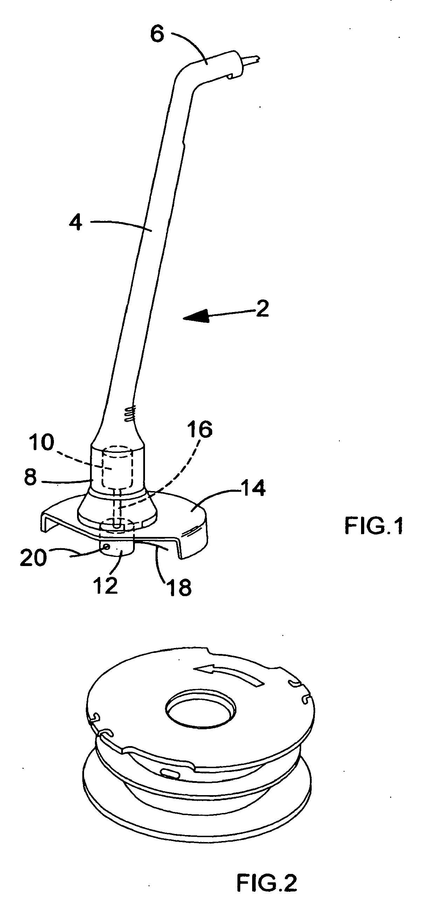

Figure 1 is a perspective general view of a string trimmer 2. The string trimmer 2 comprises an elongate shaft 4 having at one end a rear handle 6 and at the other end a motor housing 8. Alternatively the string trimmers can have the motor housed elsewhere in the string trimmer, for example in the rear handle 6. Mounted within the motor housing 8 is an electric motor 10 which rotatingly drives a cutting head 12 containing a spool upon which is wound cutting line, i.e. line for cutting foliage. Connected to the base of the motor housing is a guard 14. The cutting head 12 is mounted on a spindle 16, driven by the motor 10. Two lengths of cutting line 18and 20 extend from the spool and through the side of the cutting head 12 in radially opposite directions. Alternatively, the spool may comprise a single length of cutting line 18. When the electric motor 10 is activated, the spindle 16 and hence cutting head 12 rotate, causing the two cutting lines 18 and 20 to extend outwardly in a horizontal plane in radially opposite directions. The guard 14 surrounds the path swept out by the two cutting lines 18 and 20 as they rotate.

In use, the cutting line can become damaged as it rotates and cuts foliage. Breakages can occur in the line. This can reduce the swath or cutting area of the string trimmer and is clearly undesirable. Some mechanism for feeding line from the spool is required. One example is disclosed in US-A-4,118,864, which relates to a hollow shaft string trimmer. In this example, line spools are provided with external gears for engagement with a worm control gear.

Many string trimmers comprise automatic line feed mechanisms, which enable the spool to rotate within or in relation to the cutting head 12 to allow cutting line wound on the spool to be fed out as the cutting head rotates. This is useful when the line which extends from the cutting head breaks due to wear and tear. In existing designs of auto feed mechanisms, the auto feed mechanisms interact between the base of the cutting head and the spool. EP-A-0,417,966, EP-A-0,417,967, EP-A-0,838,144, and EP-A-1,183,932 all disclose examples of automatic feed mechanisms which serve to maintain the length of cutting line in use.

US-A-4,493,151 discloses an apparatus for cutting vegetation with a rotatable head carrying a non-metallic cutting line extended into a cutting plane. Additional line is extended from a supply line coil within the head into the cutting plane without independent operator action. A mechanism in the head automatically feeds replacement line whenever the free end of the cutting line is reduced to less than a predetermined maximum length in the cutting plane. The cutting line length is always extended to this predetermined maximum length at all operational rotational speeds, without adjustment, and in a positive step-by-step mode of segmental line advancement. The line feeder mechanism has an escapement cam with an off center pivotal mounting that senses both centrifugal forces on the cutting line and changes in rotary speed of the head.

In the example of the system in EP-A-1,183,932, the cutting head comprises a base which is rigidly mounted onto the spindle of an electric motor. The base comprises a disc around the periphery of which is formed a wall which extends downwardly, with respect to the handle. The cutting head is configured to receive a spool having cutting line wound thereon. A lid is then placed on the base to enclose the spool within the cutting head. A balanced pivot arm is provided, on the cutting head or the spool, having a projection which engages with a groove on the spool or the cutting head automatically to control rotation of the spool relative to the cutting head and therefore the dispensing of additional cutting line when required.

Conventionally, in the device such as that described in EP-A-1,183,932, when a spool has run out of cutting line, a user removes the lid from the cutting head so as to gain access to the spool in the base. A replacement spool can then be inserted onto the tool and the lid is replaced. Although this system can work well, a problem can be encountered in that due to the manner in which the balanced pivot arm interacts with the spool and its housing, the length of line dispensed on each line feed is larger than might be desired. Typically the length of cutting line fed during each line feed tends to be about 20mm. If the groove were reshaped so as to reduce this line feed amount, due to the way in which the balanced pivot arm interacts with the spool, it is extremely difficult to ensure smooth and reliable running of the system. For example, the system could slip and release cutting line when not needed or fail to release cutting line when it is needed.

According to a first aspect of the present invention, there is provided a spool cartridge according to claim 1.

A spool cartridge is provided that enables automatic accurate and metered dispensation of cutting line from a spool for use in a string trimmer. Indeed, the spool cartridge dispense cutting line in discrete portions. The use of an internal gear coupled to the spool itself enables the amount of line dispensed in each feed operation to be accurately controlled. Furthermore, the use of an internal gear enables the selection and/or variation of gear ratios, such that the amount of line dispensed in each feed operation can be made smaller than was previously possible without loss of reliability. The fact that the gear is internal to the spool itself ensures that the device can be compact and can easily be produced with the locking assembly already present. This means that the scope for operator error when changing the spool cartridge is reduced or avoided.

In addition, the use of a spool housing ensures that line does not unwind when the line runs out or when one of the lines snaps and the user has to rethread a partially used housing and new cartridge is required. This is particularly beneficial. Typically when a spool is being changed a loose end to the cutting line is required as this will usually need threading through some opening within the cutting head. It is not uncommon using conventional systems for a large amount of the line to become unintentionally unravelled. This is frustrating for a user and also can lead to damage of the line if the user then speedily winds it up on the spool again perhaps introducing twists and torsion and the like into the line whilst doing so. In the present embodiment the spool cartridge itself is provided with a housing which serves to enclose the line on the spool and thereby stop it unwinding when this is not desired by a user.

The locking assembly, includes a pinion in engagement with the control gear, and a cam, wherein, in use, the cam is arranged to be engaged by the engagement end of the locking arm to lock the spool with respect to the spool housing.

Indeed, the use of a cam and pinion assembly in combination with the spool enables accurate and precise control of the length of line released by the spool on a feed operation. Furthermore, by selection of an appropriately shaped pinion and cam, the length of line released by the spool on a feed operation can be varied in dependence on the particular tool with which the spool cassette is to be used. In addition, since the length can easily be controlled by selection of the cam and pinion, a common spool cassette housing and form can be used which only requires insertion of a different cam and pinion to be used in a different application. This simplifies manufacture since a single tooling will be sufficient to design the basic spool housing and internal gear for plural appropriate applications.

In an embodiment, in which the pinion has an axis of rotation fixed relative to the spool housing but moveable relative to the spool for controlling the dispensing of cutting line from the spool cartridge, the locking cam assembly is arranged either to be in a locked configuration, in which movement of the spool relative to the spool housing is locked or a feed configuration in which the spool is able to rotate relative to its housing to thereby enable cutting line to be fed from the spool.

The provision of a dedicated axis of rotation for the pinion means that it is able to rotate independently of the spool itself and the control arm that is typically provided as part of the string trimmer itself.

In one embodiment, the cam is fixedly coupled with the pinion such that when the cam is in the locked configuration the spool is fixed relative to the spool housing via interaction with the pinion.

By providing the cam and the pinion in a fixed engagement this enables the control of the pinion to be executed through control of the cam. Thus, a simple and reliable means for control of the locking cam and pinion assembly (and consequently, dispensing of line) is provided.

In one embodiment, the locking cam assembly is formed as an integrated component. This simplifies manufacture and reduces part count which can help with storage and inventory during manufacture. Furthermore simple manufacturing techniques, such as moulding, to be used to make the locking cam assembly and materials including (but not limited to) metals, plastics and ceramics can all conveniently be used.

In one embodiment, the gear is formed as an integral part of the spool. Again as with the locking cam assembly, this simplifies manufacture, reduces part count and enables simple manufacturing techniques, such as moulding, to be used to make the spool and gear. Any appropriate material can be used. Typically, a plastic or ceramic would be used.

In one embodiment, the gear is formed as an internal circular gear on a cylindrical inner wall of a recess on the spool. This enables the gear easily to be integrated with the spool and also provides the gear within the overall volume of the spool itself such that the overall size of the spool cartridge (and consequently the automatic feed system itself) can be kept as small as possible.

In an embodiment, the ratio of the gear and the pinion is selected to ensure that a determined amount of line is released on each feed operation. By appropriately sizing the gear and the pinion and indeed the cam the amount of line dispensed on each feed operation can be controlled. Thus the system provides a means by which any desired feed amount can be easily selected.

In one embodiment, the spool housing has openings for release of line from the spool, the openings extending in an axial direction for substantially the entire length of the spool housing. The provision of axial openings in the spool housing enables the "height" from which line is dispensed to vary without any additional tensions or pressures being put on the line.

In one embodiment, the pinion has an axis of rotation and has one end movably mounted in a circular groove formed within the recess on the spool.

In one embodiment, the cam comprises a disc having a shaped cam groove formed therein. In this example, the arm on the string trimmer tool would be provided with a peg for following the groove. This provides a convenient way by which the cam/cam follower engagement can be achieved. Furthermore, the use of a cam disc with a groove ensures that engagement between the arm and the cam is secure.

According to a second aspect of the present invention, there is provided a cutting head for a string trimmer according to claim 11.

A cutting head is provided for use with the spool cartridge of the first aspect of the present invention having all the advantages of the spool cartridge described above.

In one embodiment, the cutting head comprises a movement assembly to enable the arm to be moveable in the first position so as to vary the required movement between the first position and the second position. This enables that swath of the cutting head to be varied.

In one embodiment, the movement assembly comprises a helical control pin coupled to the arm, control member coupled to the helical control pin, whereby vertical movement of the control member varies the angular position of the arm. This provides a convenient and simple means by which the linear movement of the assembly can be converted into rotational movement of the arm.

According to a third aspect of the present invention, there is provided a string trimmer according to claim 14.

There may be provided a cutting head for a string trimmer, the cutting head comprising: a locking arm having an engagement end and a balance end, a spool cartridge for engagement with the locking arm, the spool cartridge comprising: a spool rotatably mounted within the spool housing and having cutting line wound thereon, the spool comprising a control gear; a spool housing having one or more openings for cutting line; a locking assembly in geared engagement with the control gear, the locking assembly being arranged to be engaged by the engagement end of the locking arm to automatically lock and unlock the spool with respect to the spool housing; and a control member for varying the locked position of the locking arm.

A cutting head for a string trimmer may be provided in which the diameter of the cutter, i.e. the swath of the cutting line can easily and conveniently be varied by control of the locked position of the locking arm. By varying the locked position of the locking arm, the sensitivity and/or the amount of variation in extended line length that will trigger a line feed operation can easily be correspondingly varied.

There may be provided a spool cartridge for arranging in use in a cutting head of a string trimmer, in which the cutting head includes a locking arm having an engagement end and a balance end, the spool cartridge comprising: a spool having cutting line wound thereon and being rotatably mounted within a spool housing to enclose the cutting line and maintain the cutting line on the spool, the spool housing having one or more openings for cutting line; and a locking assembly arranged to automatically lock and unlock the spool relative to the spool housing.

Whereas known spool cartridges, can lead to the undesirable unravelling of string from the spool during spool change operations, in the spool cartridge of the present aspect, this can now be avoided. The use of a spool cartridge having a cartridge housing to enclose the cutting line ensures that a cartridge can easily be replaced without the risk of undesirable unravelling of the cutting line.

Embodiments of the present invention will now be described in detail with reference to the accompanying drawings, in which:
Figure 1 is a schematic representation of a string trimmer;
Figure 2 is a schematic representation of a spool for use in a string trimmer;
Figure 3 is an exploded perspective view of a cutting head for a string trimmer, including a spool cassette;
Figure 4A is a schematic representation of a spool cassette for use in the cutting head of Figure 3;
Figure 4B is a representation of a spool and locking cam assembly for use in the spool cassette of Figure 4A;
Figures 5 to 13A show schematic representations of the stages of a line feed process;
Figure 13B shows a schematic representation of part of the cassette of Figure 3 in normal running mode;
Figures 14 and 15 show representations of a spool cassette;
Figure 16 shows a representation of an example of a spool with a locking cam assembly;
Figure 17 shows a representation of the locking cam assembly of Figure 16, from below;
Figure 18 shows a representation of an example of a spool;
Figures 19 and 20 show representations of examples of a spool and locking cam assembly, with an arm engaged with the locking assembly;
Figure 21 shows a view, from above, of an example of the housing from a cutting head;
Figures 22A and 22B show views, from above, of an example of the housing from a cutting head; and,
Figures 23 to 27 show schematic representations of an example of a movement assembly which enables the position of an arm to be varied.

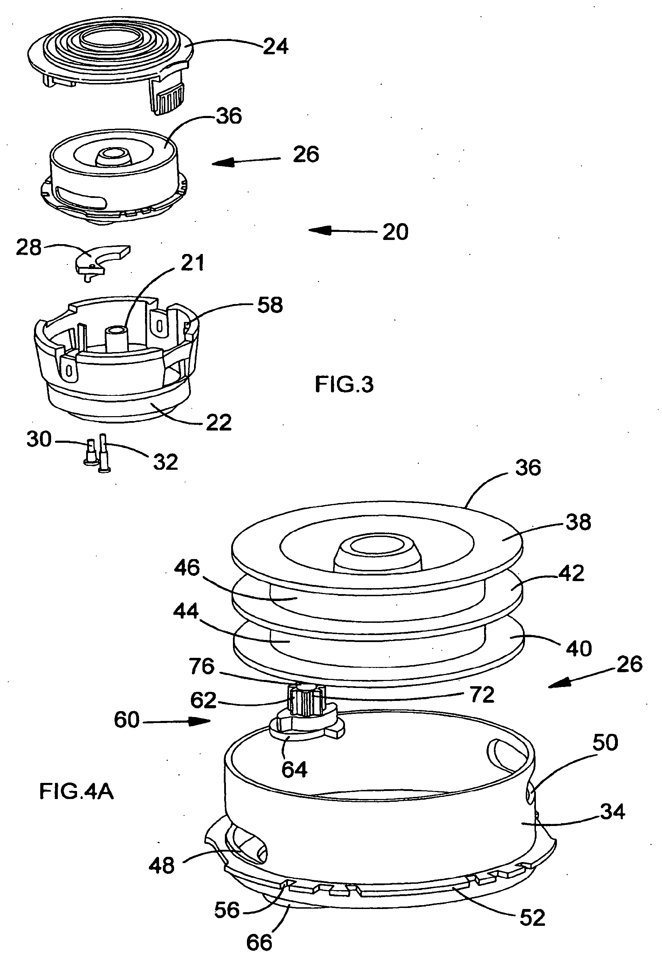

Figure 3 shows a schematic exploded view of a cutting head for connecting to a string trimmer such as that shown in Figure 1. The cutting head 20 comprises an upper section 22 and a lower section 24. In use, the upper section 22 would be rotatably mounted to a string trimmer tool and the lower section 24 would be removably connected to the upper section 22 so as to enable a spool cassette 26 to be inserted into the cutting head, as will be explained in detail below. A central axial mounting bore 21 is provided, on which a spool cassette 26 may be mounted and also, optionally, arranged to receive a spindle coupled to an output shaft from the motor and be driven thereby to cause rotation of the spool cassette and protruding string therefrom. The mounting of upper section 22 to the string trimmer tool and rotational engagement thereto may be provided by a shaped recess in the surface of the upper section 22 that corresponds to some shaping on the spindle or output shaft from the motor, thereby enabling a secure drive connection between the motor output shaft and the upper section 22. It will be appreciated that the manner in which the cutting head 20 may be attached to a string trimmer can vary between applications and the terms "upper" and "lower" regarding the housing and parts of the assembly as a whole should be interpreted accordingly. In general "upper" means closest to the string trimmer tool in use and "lower" means furthest from the string trimmer tool in use.

The upper housing section 22 comprises two pivot axes mounted thereon, to be described in detail below. One of them provides an axis of rotation for a weighted pivot arm and the other provides an axis for a locking cam assembly. Preferably the axes are provided by pins that are received within openings in an upper surface of the upper section 22 although in one embodiment they are provided as integral parts of the upper section 22 itself, thus reducing part count during manufacture.

The cutting head as a whole includes a pivot arm 28 for engagement with the locking cam assembly (not visible in Figure 3) provided on the spool cassette 26. As mentioned above, the two pivot axes may comprise pins 30 and 32 arranged, in use, to be anchored to the upper surface of the housing 20 so as to provide pivot axes for the arm 28 and the locking cam assembly, to be described in greater detail below.

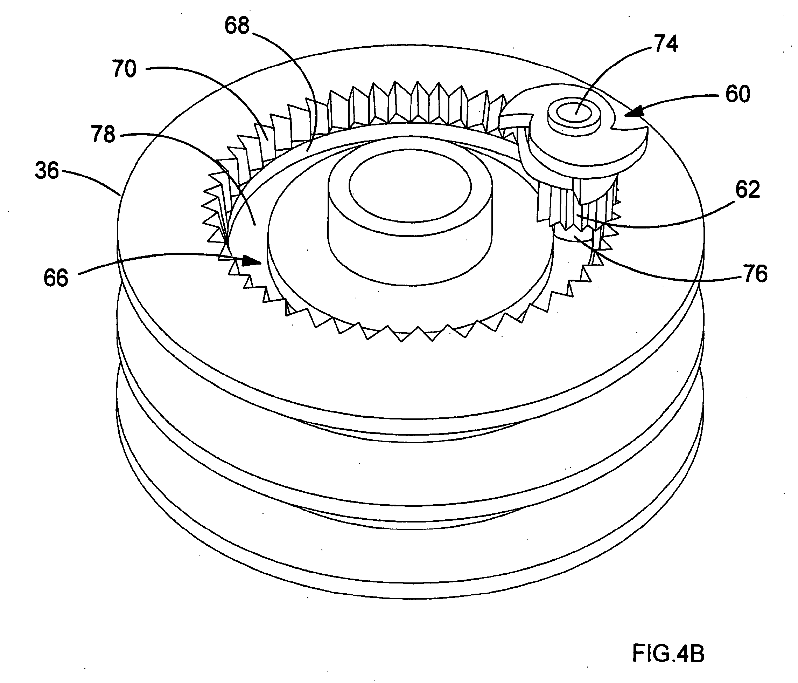

Figure 4 shows a more detailed exploded view of the spool cassette 26. The spool cassette 26 comprises a spool cassette housing 34 within which is provided a spool 36. The spool 36 comprises an upper annular flange 38 and a lower annular flange 40. In addition, in this example, since the spool cassette is for use with a two-string string trimmer a central annular flange 42 is provided. Thus, the spool defines an upper 44 and lower 46 annular region each for receiving cutting line for use on the string trimmer.

The spool cassette housing 34 comprises openings 48 and 50 through which cutting line can protrude for use with the tool. Furthermore, the openings 48 and 50 provide passage through which cutting line can be extended when fed from the spool during a feed operation.

The spool cassette 26 comprises a spool cassette housing 34 which is substantially cylindrical and in which the openings 48 and 50 are provided. A circular flange 52 is provided having various cut-outs 56 which serve to enable and ensure alignment between the spool cassette 26 and the upper housing section 22 of the cutting head. Referring to Figure 3, keys 58 are provided on the inner cylindrical surface of the upper housing section 22 which are arranged to correspond to the cut-outs 56 and therefore ensure alignment of the spool cassette 26 with the upper housing section 22. In one example, the keys may also provide a means by which rotation of the spool cassette may be driven from the motor via the cutting head. Any suitable means for ensuring alignment and/or a drive connection between the spool cassette and the cutting head may be used.

As can be seen in Figure 4A, a locking assembly is provided, in this case being a locking cam assembly 60 and being provided as part of the spool cassette 26. The locking cam assembly 60 comprises a pinion 62 fixedly coupled to a cam 64. Preferably, although not necessarily, the pinion 62 and the cam 64 are formed as a unitary component as this would simplify manufacturing and subsequent assembly of the spool cassette. The upper circular surface of the spool cassette 26 has a shaped recess 66 for receiving the locking cam assembly 60. The locking cam assembly, by its interaction with the arm 28 serves to lock the position of the spool 36 with respect to the spool cassette housing 34, and hence the upper section 22 of the housing of the cutting head. Only when the arm 28 moves due to a change in balance of forces acting on the spool and the cutting head, e.g. due to a break of or damage to the cutting line, is the lock released and line consequently dispensed.

Referring to Figures 3 and 4A, it will be appreciated that relative rotation (in a feed direction) of the spool 36 and the spool cassette housing 34 will lead to string being fed out from the openings 48 and 50. Thus, in the present system, by use of the locking cam assembly and the separate axes of rotation for the pivot arm 28 and the locking cam assembly, accurate and controlled relative motion between the spool 36 and the spool cassette housing 34 is achieved. Use of an appropriately shaped cam and cam follower (provided by one end of the arm 28) enables the amount of string fed in each feed operation to be accurately controlled. Typically, using this system feed lengths of between 7 and 15 mm are obtained. More preferably a feed length of about 8.5 mm is obtained.

By enabling a reduced length of line to be reliably dispensed when required in a line feed operation improved usage of the string trimmer is consequently enabled. As the end of cutting line gets worn or damaged in use the cutting performance of the string trimmer will be deleteriously affected. Accordingly, the quicker new line can be fed out, the less time the string trimmer will be operating in this sub-optimal manner. By using a feed system in which the feed length is reduced, the time between line feeds can be reduced and therefore for a larger proportion of its usage time, the string trimmer will be operated in a closer to optimal cutting mode.

The optimal cutting mode can be when a predetermined length of cutting line is used to generate a certain swath size. The improved line feed operation also allows the line to be operated with a length closer to a cutting blade in the guard 14 without continuously feeding the cutting line. The cutting blade in the guard 14 ensures that a predetermined swath of cutting line is maintained within the guard 14. This means if too much line is extended, the line is trimmed to the correct length and maintains the predetermined swath size by virtue of the rotating line impacting against the cutting blade. In this way, the improved line feed operation reduces the amount of line trimmed by the cutting blade and improves the efficiency of the string trimmer. For example the spool cartridges will be replaced less often by the user.

Figure 4B shows a perspective view from above of the spool cassette 26 including a spool 36 and a locking cam assembly 60. In this example, the locking cam assembly 60 is shown on the lower side of the spool cassette 26. It will be appreciated that what matters is that the locking cam assembly 60 is on the side of the spool that corresponds to the positioning of the arm 28 on the cutting head.

Referring now to the spool 36, it can be seen that is this example the spool 36 comprises an annular recess 66 having at its outer cylindrical wall 68 an internal gear 70. The use of an internal gear means that the size of the device can be smaller than if an external gear were used. Furthermore, it enables the locking cam assembly to be provided within the cassette 26 itself and therefore not as an external part of the cutting head 20 (although it does of course interact with the locking arm 28 in the cutting head 20). The internal or control gear 70 has teeth arranged to cooperate with the teeth 72 of the pinion 62. The interaction between the teeth of the internal or control gear 70 and the pinion 62 serves to lock the spool 36 with respect to the spool cassette housing 34 when the arm 28 is in a locked engagement with the cam. The pinion 62 has a central axial bore 74 which, in use receives pin 32, described above, through the cutting head housing upper section 22. The pin 32 defines an axis of rotation for the locking cam assembly 60.

The locking cam assembly, interacts with the pivoted arm 28 (to be described below) provided on the cutting head 20, such that when the arm 28 moves into a feed position, the pinion 62 is able to rotate relative to the spool 36. Since the position of the cam 64 is fixed relative to the upper section 22 of cutting head 20, relative rotation of the cam 64 and the spool 36 is achieved by rotation of the spool 36 relative to the spool cassette housing 34 leading to the feeding of cutting line from the spool 36.

The pinion 62 cooperates with the internal gear 70 on the spool 36 thereby enabling controlled and accurate dispensing of the line. As can be seen, the axes of rotation of the pinion 62 and the internal gear 70 are parallel. This enables the cutting head 20 to be particularly compact since, in fact, the spool cassette 26 itself can define the outer perimeter for the control features of the cutting head 20. The dimension and configuration of the cam 64 and pinion 62 enable the length of line fed on each feed operation to be easily and accurately determined. Thus, the movement of the arm 28 serves to control the relative angular position between the spool 36 and the spool cassette housing 34 and thereby the length of cutting line that protrudes through openings 48 and 50. The shaping of the pinion and its provision on an axis of rotation, fixed relative to the upper section 22 of cutting head 20 therefore serves to control accurately and reliably the extension of cutting line from the spool cassette. Indeed, the locking cam assembly 60 functions as an escapement, allowing the spool 36 (and line extending therefrom) to advance or "escape" a fixed amount with each rotation of the cam due to the interaction with the fingers on the arm 28.

The locking cam assembly 60 preferably comprises an axial extension 76, seen most clearly in Figure 4A, which is arranged to cooperate with a circular groove 78 formed in the recess 66 within the spool 36. Thus, the pinion 62 is securely anchored at both of its axial ends by virtue of engagement with the housing section 66 at one end and the groove 78 in the recess in the spool 36 at the other. This provides for a stable and robust positioning of the locking cam assembly 60 and is preferable to, say, having only one end of the axis of rotation anchored. However, having only one end of the locking cam assembly 60 anchored does provide for a simple construction of the spool itself.

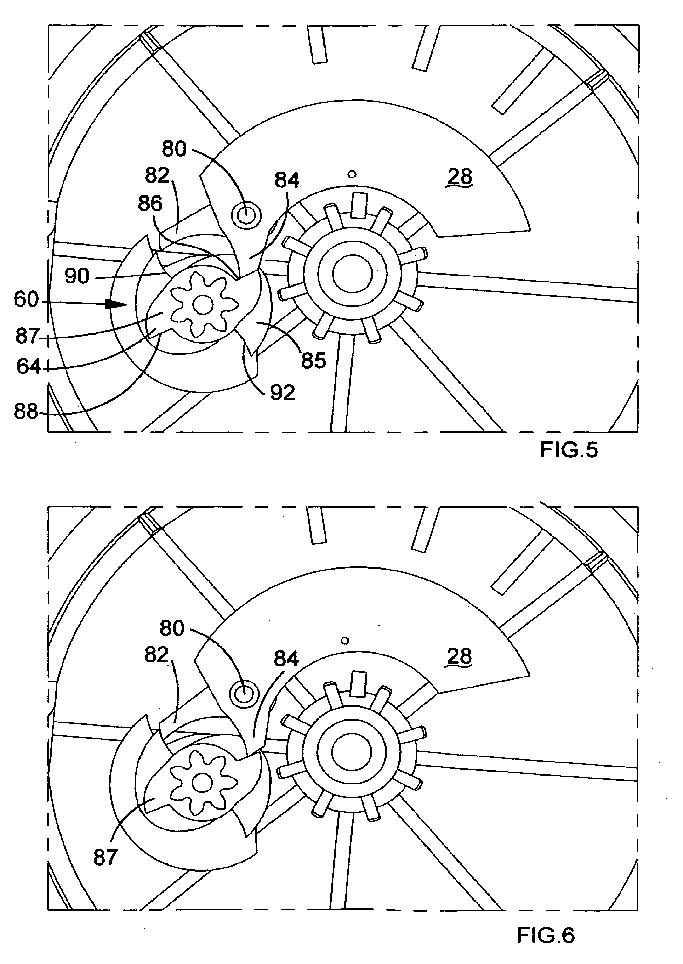

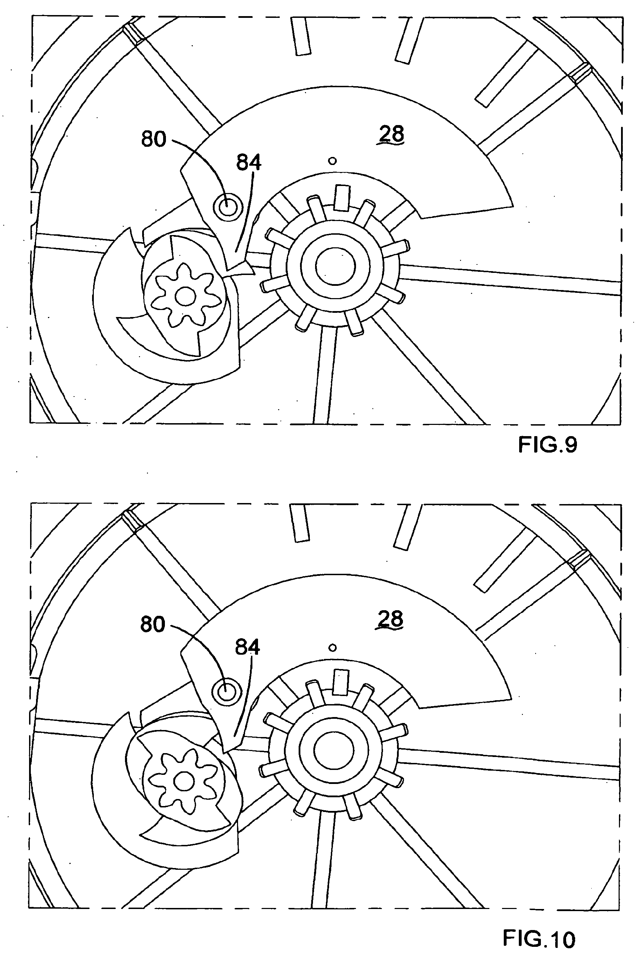

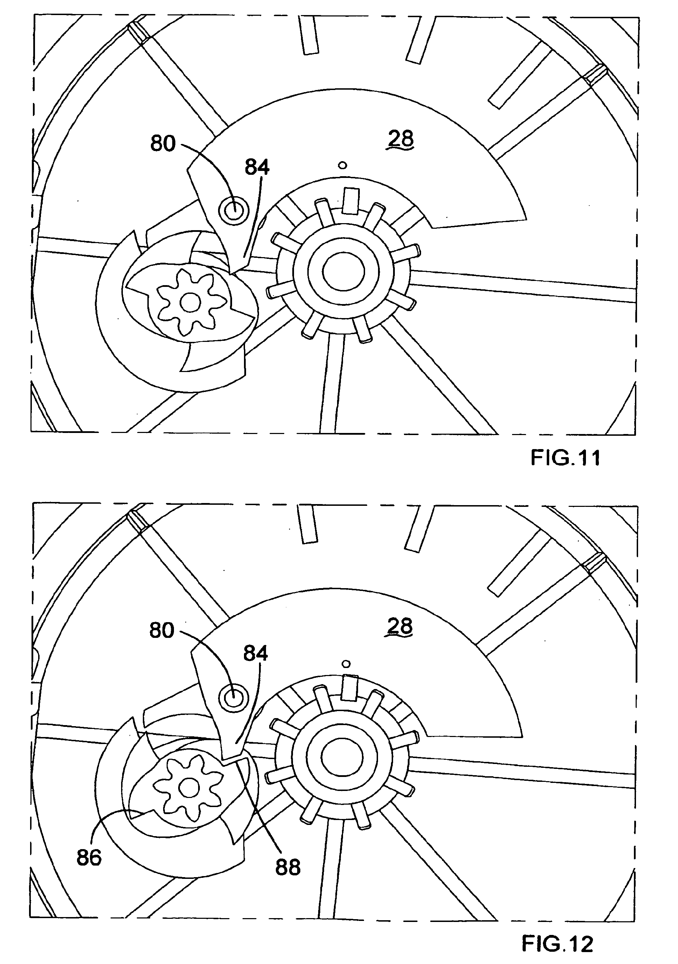

Operation of the cutting head 20 and spool cassette 26 and a feed operation will now be described in detail with reference to Figures 5 to 13A. Figure 5 shows a view looking into the upper section housing 22 of the cutting head 20 showing the interaction between the locking cam assembly 60 and the arm 28 (with other parts of the spool cassette 26 not shown for clarity). The pivot arm 28 is pivoted about an axis 80, which is concentric with the pin 30,_ parallel to the axis of rotation of the spool cassette 26 such that in normal running position, i.e. when there is no feeding of the line and the spool 36 is stationary relative to the spool cassette housing 34, the pivot arm 28 is in locking engagement with the cam 64.

The pivot arm 28 comprises a cam follower which in this example is in the form of a pair of engagement fingers 82 and 84. The fingers are stepped in that they are at different vertical levels so as to enable engagement with the cam 64. The fingers 82 and 84 cooperate with surfaces of the cam 64, and more particularly upper and lower cam members 85 and 87, to lock the pinion 62 relative to the housing of the spool cassette 26 and therefore not allow cutting line from the spool 36 to be unwound. When the arm 28 moves, as will be described below, engagement and interaction between the fingers 82, 84 and the cam 64 enables rotation of the spool 36 relative to its housing so as to release line from it.

In Figure 5, relative rotation of the spool 36 to the spool cassette housing 34 is not possible due to the locking interaction between the finger 84 and the surface 86 on cam 64. As explained in for example, EP-A-1,183,932, in normal non-feeding mode, there is an equilibrium established between the force, which is lower, by the gear ratio than standard design, on the spool due to the rotating mass of extended line (in the present case acting through the locking cam assembly) and the force generated by the arm 28 itself due to the centripetal acceleration acting through the centre of mass of the arm 28. When the line becomes damaged and, say, a section is broken off, the force on the spool 36 due to the rotating mass of extended line reduces whereas the force acting on the arm 28 remains substantially constant. The arm 28 therefore rotates and continues to do so until the lock with the cam 64 is released.

At this stage the outwards rotational movement of the arm 28 is limited due to the interaction of the finger 82 with upper cam member 85. The interaction between finger 82 and upper cam member 85 is merely one way in which the available movement of the arm 28 can be limited. As well as limiting movement of the arm 28, the interaction between the upper cam member 85 and the finger 82 forces the other finger 84 to reengage with the lock the lower cam member 87 after one half turn.

In other examples, a stop may be provided on the spool cassette or the cutting head housing 22 with which the opposite end of the arm can engage as it swings outward. However, the use of lower cam member 85 is particularly advantageous as it provides a convenient and simple means by which the arm 28 can be repositioned in use to ensure that once a feed operation has occurred due to movement of the arm 28, after one half turn of the locking cam assembly the finger is 84 is brought back into engagement with upper cam member 87.

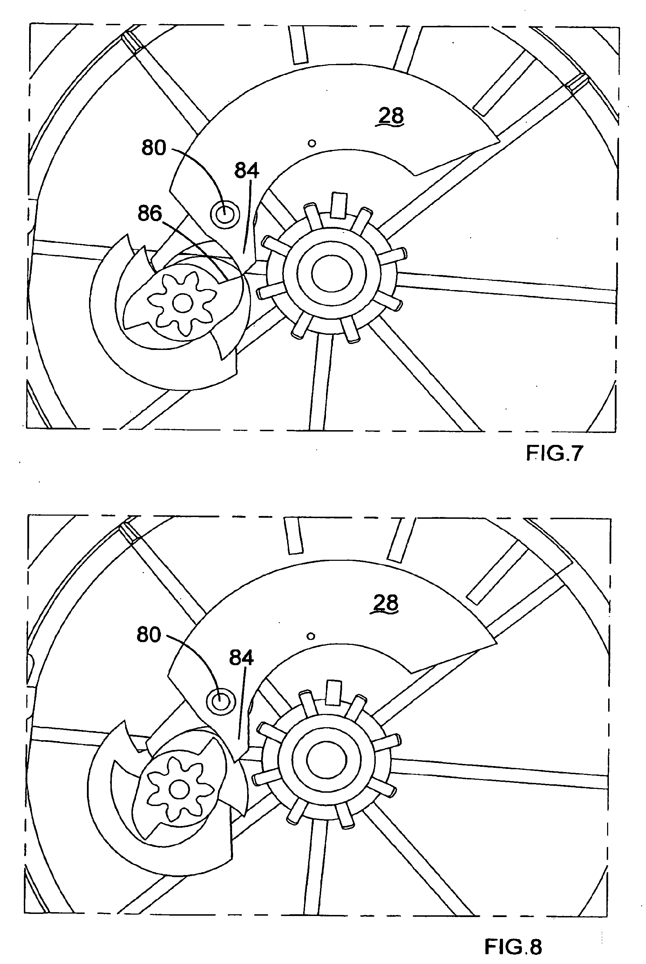

Indeed, referring to Figure 6, it can be seen that the arm 28 has rotated slightly counter-clockwise about pivot 80 such that the finger 84 is moving to clear the surface 86 of the cam 64. There is as yet no contact between the finger 82 and the upper cam member 85. In Figure 7, clearance has just been achieved between the finger 84 and the first cam surface 86. The angular position of the arm 28 is such that there is now clearance between the finger 84 and the first cam surface 86, thus freeing the pinion 62 to rotate, under force of the motor and centripetal acceleration of the string. The cam 64 therefore is able to rotate relative to the spool 36 and continues to do so in the views of Figures 8 to 12, such that line feeding occurs.

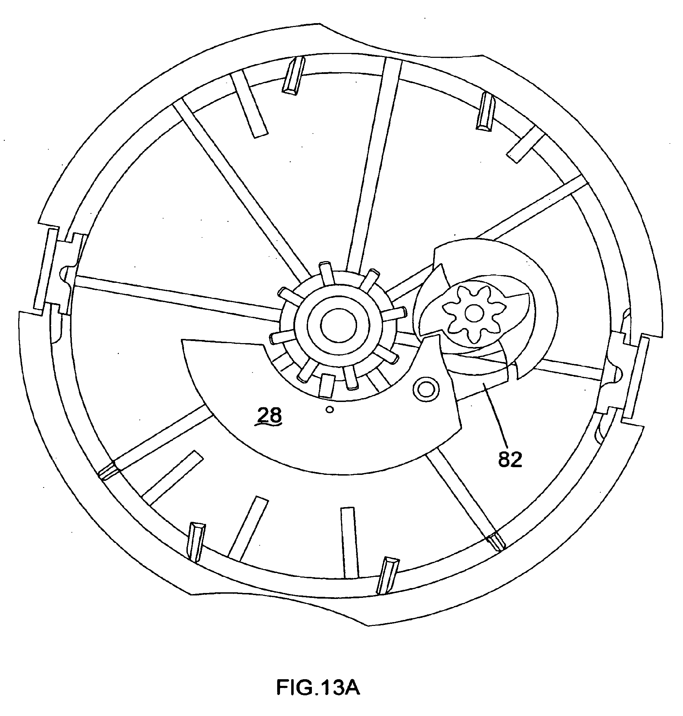

It is to be noted that as the line feeding progresses through the positions shown in Figures 8 to 13A, with lower cam member 85 engaged with finger 82, the angular position of the arm 28 is gradually changing and accordingly, as can be seen in Figure 13A, the finger 84 is again in a locking position, now with respect to the second cam surface 88. Thus, the cam 64 has turned 180 degrees as has the pinion 62, releasing a corresponding length of string. The unlocking of the arm 28 by the cam 64 therefore enables a metered amount (e.g. determined by the dimensions of the cam 64 and the pinion 62) to be released from the spool 36. It is of course to be noted that if this length of cutting line were not sufficient to have caused a corresponding balance in the forces acting on the spool and the arm 28, then the pivot arm 28 would not have moved in sufficiently so as to lockingly re-engage with the cam 64, i.e. so as to form a lock between the finger 84 and the second cam surface 88. In other words, further string would have been allowed to be released until a lock position is established between the fingers on the arm 28 and one of the cam surfaces 86 and 88.

Thus, by interaction between the finger 84 and the first and second cam surfaces 86 and 88 on the cam 64, automatic feeding of the cutting string can be enabled until equilibrium is re-established. It will be appreciated that the length of string dispensed in each dispense operation is easily controlled by determination of the dimension of the cam 64. In this case, the cam 64 is structured such that each time it is released usually half a turn of the pinion 62 is enabled (and a corresponding length of string dispensed). In some cases the cam 64 is shaped such that each dispense operation enables one third of a turn of the pinion. Any appropriate dimensions of the pinion 62 and cam 64 can be selected.

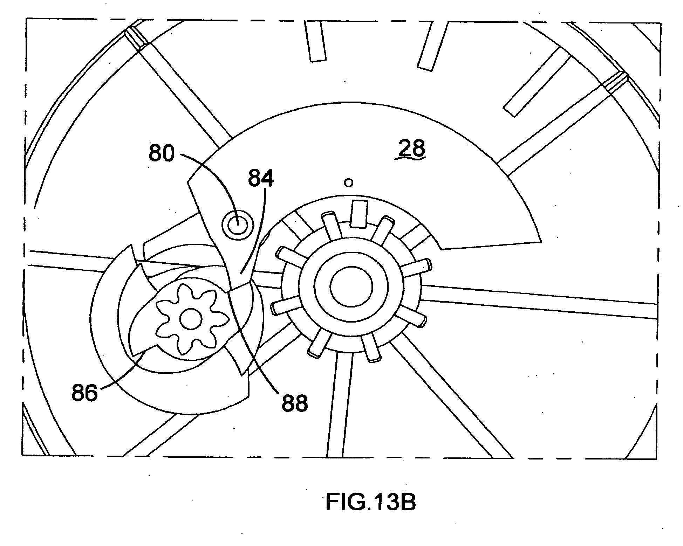

Referring now to Figures 13A and 13B, reset has been complete and the length of string is now as required to balance the system and ensure effective operation thereof. Referring to Figure 13A, the arm 28 in fact has moved slightly beyond its normal running position which therefore prevents over-feeding due to lever bounce. In some embodiments this is done with two separate feed and reset cams.

Figure 13B shows again, the locked position similar to that of Figure 5. However, in Figure 5 the engagement between the cam and the finger 84 is via surface 86. In Figure 13B, the cam 64 has rotated such that the finger 84 now interacts with surface 88.

Thus, a compact and efficient system is provided by which the length of string from the string trimmer can be automatically controlled and maintained at a required level. As explained, the weighting and pivoting of the arm 28 in combination with the sizing of the pinion and cam is selected so as to ensure that a desired length of cutting line protrudes from the spool cassette housing 34 and cutting head 20 and also that the length of line fed in each feed operation is accurately controlled.

The cylindrical spool cassette housing 34 serves to ensure that line is retained on the spool 36 and does not unwind accidentally or unintentionally during replacement of a spool 36 in the tool. Indeed, whereas the automatic feed system of the prior art discussed above, works well, the undesirable unravelling of string from the spool that can sometimes occur during spool change operations is now avoided by use of the present system. The use of a spool cassette having a spool cassette housing to enclose the cutting line ensures that a spool cassette can easily be replaced without the risk of undesirable unravelling of the cutting line. Indeed, by providing a spool cassette for use in a cutting head of a string trimmer (as opposed to simply a spool), the problem of undesired unravelling and potential wastage of cutting line during loading is avoided.

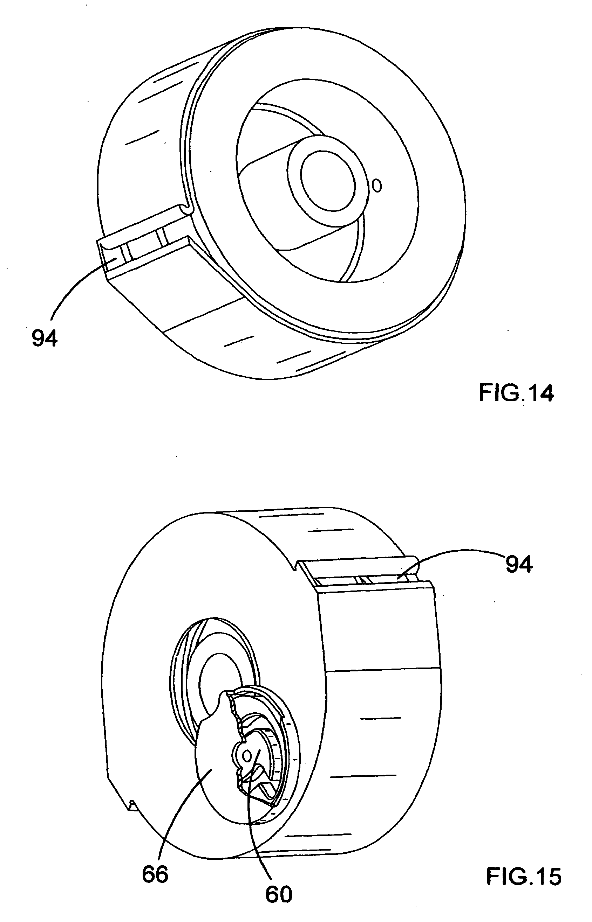

Figures 14 and 15 show an alternative embodiment of a spool cassette. In this example, instead of having horizontal openings 48 and 50 to allow cutting line to protrude from the spool cassette, the retainer or housing 34 is provided with vertical openings 94 which enable the cutting line to protrude from the spool cassette. As can be seen in Figure 15, the spool cassette housing 34 comprises an extension 66 that serves to house the pinion and cam assembly 60. The extension has a cutaway so as to enable interaction with the groove on the pinion and cam assembly. The operation of this spool cassette is the same as that described above. It will be appreciated that as the cutting line is used up over time during use of the string trimmer, the cutting line effectively unwinds from the spool. The point on the reel of wound cutting line on the spool which is the start of the extension of the line from the spool will move (up and down depending on the winding of cutting line) as the cutting line unwinds. The use of vertical openings has the advantage that this movement is enabled unimpeded.

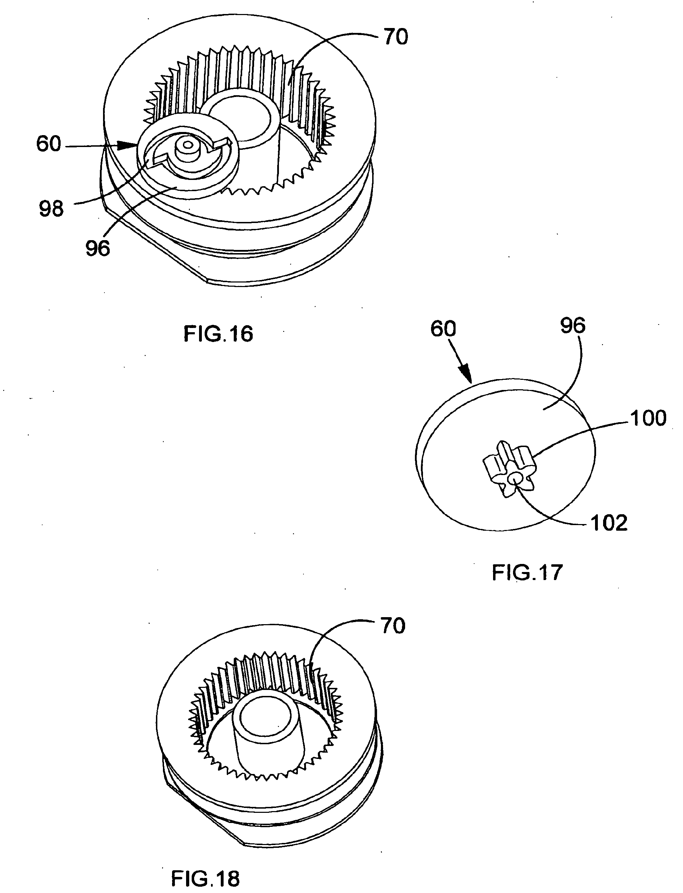

Figure 16 shows an alternative embodiment of a spool and cam mechanism as would be provided within a spool cassette. In the example of Figure 16, for clarity, the housing of the spool cassette is not shown. As can be seen, in this example, the internal gear 70 extends for the full axial length of the spool. Furthermore, the cam mechanism 60 comprises a plate 96 having a shaped groove 98. The groove 98 corresponds to the shape of the cam 64 as described above with reference to Figure 5. The cam assembly 60 comprises a pinion on an underside of the plate 96 having teeth 100 for engagement with the teeth on the internal gear on the spool. The pinion assembly 60 has a longitudinal bore 102 for receiving the pin or pivot shaft 32.

In use, the operation of the device of Figures 16 to 18 will be the similar to that described above with reference to Figures 5 to 13A. However, the interaction between the locking cam assembly 60 and the arm 28 will be slightly different, as will now be described.

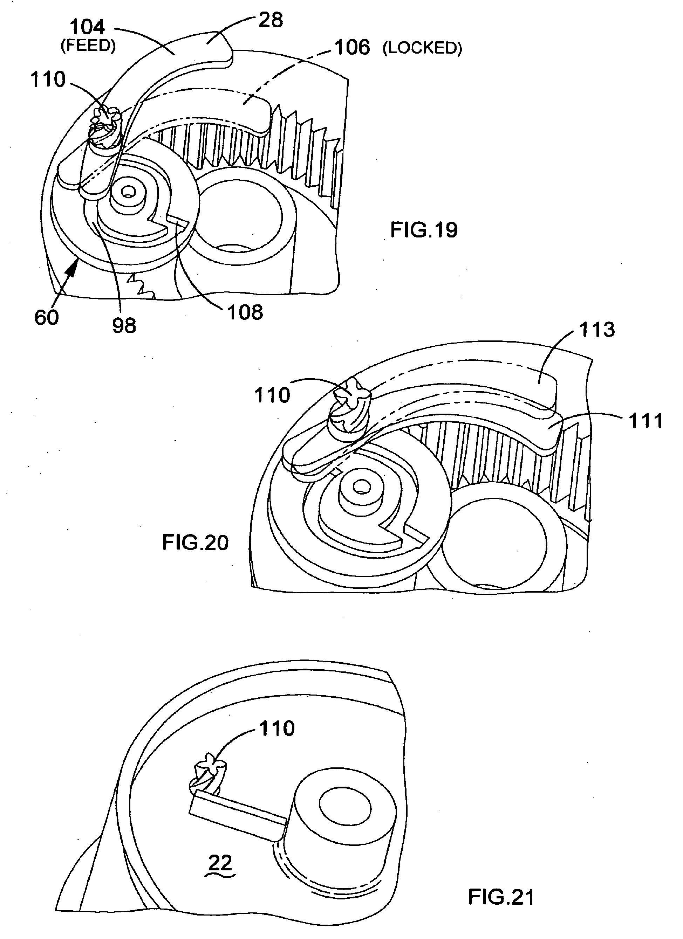

Figure 19 shows a schematic representation of the arm 28 in two positions. A downwardly depending peg functions as an engagement protrusion (not shown) on the underside of the arm. The engagement protrusion slidingly engages in the groove 98. The peg typically has a length roughly equal to that of the depth of the groove 98. Movement of the peg around the groove is thus analogous to movement of the fingers around the cam described above with reference to, say, Figures 5 to 13.

In Figure 19, a feed position 104 and a locked position 106 of the arm are shown superposed. In uses the arm 28 will of course at any point in time only be in either the feed position 104, the locked position 106 or moving between the two. In the feed position 104, the angle of the arm 28 is such that the protruding peg (not shown) which extends from the underside of the arm 28 into the groove 98 is free to move around the groove as the cam 108 rotates. When the cam 64 has rotated such that the peg engages surface 108, then the cam is locked and therefore no further rotation of the spool (and consequent feed of the line) is possible. Thus, by movement of the arm 28, relative rotation of the spool 36 and the pinion is enabled or locked thereby allowing corresponding feed of line from the assembly.

In the locked position 106, the peg engages with a second locking surface of the cam disc (not visible as it is obscured by the arm itself), corresponding to the surface 108, but diametrically opposed.

Preferably, the position of the arm or lever in which it is locked is controlled so as to enable the customer or used in manufacture to individually set to eliminate production tolerances to vary the swath of the device or feed point. In other words, the radius to the centre of gravity of the lever is increased which has the same effect as increasing the mass of the lever. As can be seen in Figure 20, two different locked positions are shown. In a first of the locked positions 111 the distance from the centre of the spool to the centre of gravity of the arm is less than in the second of the locked positions 113. A helical control pin 110, which defines or acts as the pivot axis for the arm in use, is provided which enables the position of the arm to be varied, as will be explained below.

Considering the first of the positions 111, the peg (not visible) on the underside of the arm has to move the distance along the lock surface with which it is engaged until the cam and pinion are unlocked.

With the arm starting in the second of the lock positions 113, the distance that the peg (not visible) on the underside of the arm 28 has to move to unlock the cam and pinion is reduced. Thus, by controlling the starting position of the arm, the sensitivity of the arm 28 and the variation in line weight that will trigger a feed operation can be varied.

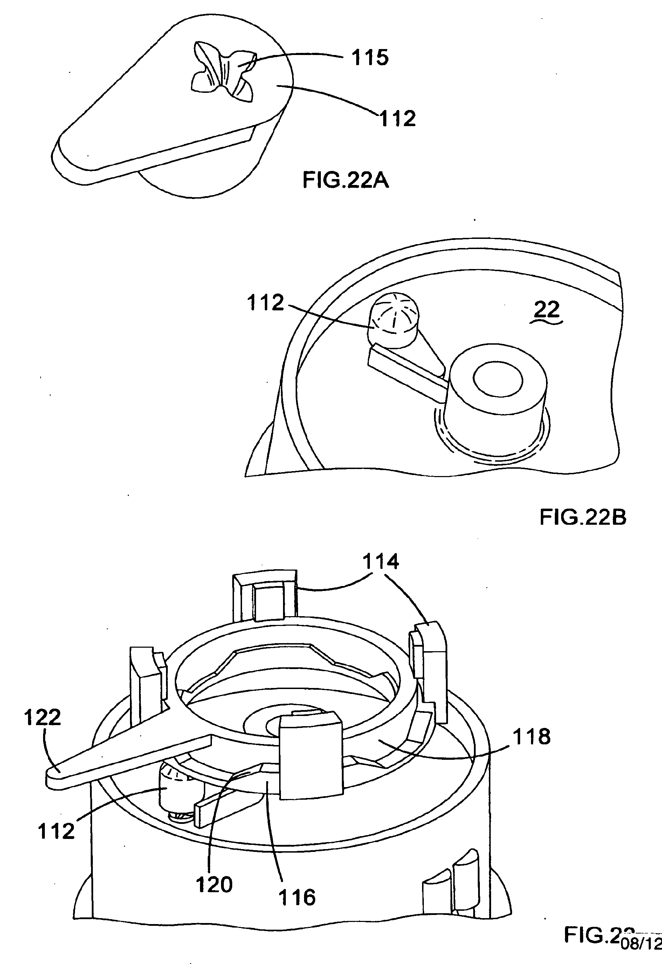

Figure 21 shows a helical control pin 110 rotatably fixed to the arm 28 and arranged to protrude through the upper housing 22. As seen in Figure 22A, a control member 112 is provided having a helical inlet 113, which is an internal helical spline shaped to correspond to the helical control pin 110. Figure 22B shows the control member 112 on the surface of the upper housing 22. By moving the control member 112 axially up and down, through interaction with the helical control pin 110, the start angular position of the arm 28 is varied. As described above with reference to Figure 20 this has the effect of altering the feed point of the automatic feed system.

Figures 23 to 27 show an example of an arrangement by which the control member 112 may be moved axially up and down. Referring to Figure 23, a clam shell possibly fixed on the string trimmer and forming part of the automatic feed system includes fixed ribs 114. A thrust ring 116 is provided coupled to a control ring 118. The control member 112 is coupled to thrust ring 116 movably connected to control ring 118. Circular chamfer portions having surfaces 120 provided on the thrust ring 116 are arranged such that corresponding surfaces 122 on the movable ring 118 ensure that as the ring 118 is rotated the thrust ring 116 causes the control member 112 to move axially up and down. Due to the interaction with the helical control pin 110 and the control member 112, this movement causes the angular position of the arm 28 to be varied as described with reference to Figure 20. The fixed ribs 114 thereby provide an anchor with respect to which the thrust ring can move axially and thereby control movement of the control member 112.

The precise arrangement of the thrust ring 116 and rotatable member or control ring 118 is merely one example of an arrangement by which the arm 28 may be controlled to have its starting position varied.

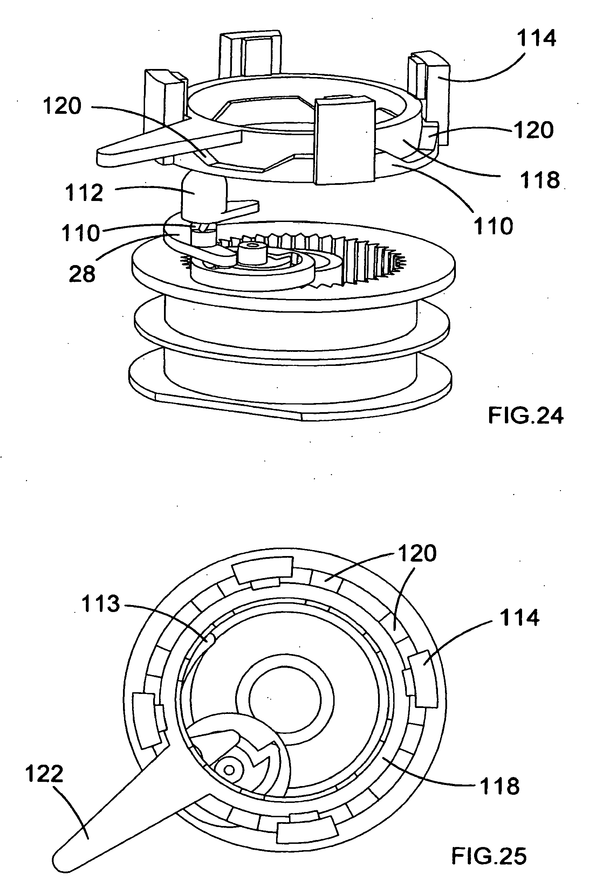

Referring now to Figure 24 the thrust ring 116 and control ring 118 are axially in their closest possible configuration such that control member 112 is axially in its highest position. The helical control pin 110 therefore places the arm 28 in the position 113 as shown in Figure 20.

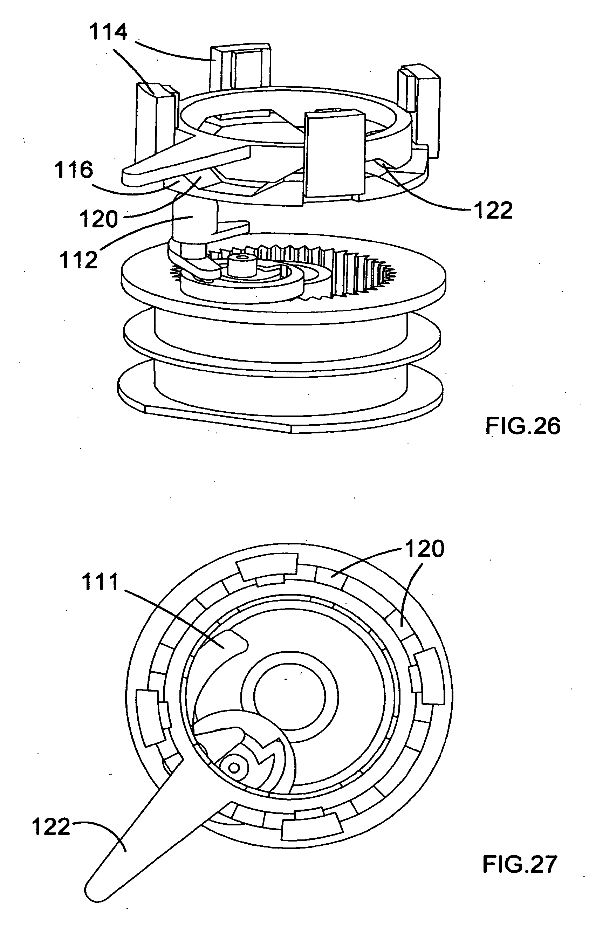

In contrast, in Figures 26 and 27, the thrust ring 116 has been moved down such that control member 112 has engaged the helical pin 110 to force the start position of the arm 28 to be in its second position 111. Indeed, as can be seen in Figure 26, there is now an axial spacing between the thrust ring 116 and the control ring 118. A radially protruding arm 122 provides a simple and easily accessible means for moving the control ring 118 so as to vary the axial position of thrust ring 116 and control member 112.

A simple and reliable means is therefore provided by which a user can vary the swath of the automatic feed system. The thrust ring, control ring and helical pin together with the control member may be considered a non-limiting example of a movement assembly which enables the start position of the arm to be varied.

Embodiments of the present invention have been described with particular reference to the examples illustrated. However, it will be appreciated that variations and modifications may be made to the examples described within the scope of the present invention.

## Claims

1. A spool cartridge (26) for arranging in use in a cutting head (20) of a string trimmer, in which the cutting head includes a locking arm (28) having an engagement end and a balance end, the spool cartridge comprising:
a spool housing (34) having one or more openings (48; 50) for cutting line;
a spool (36) rotatably mounted within the spool housing (34) and having cutting line wound thereon, the spool (36) comprising an internal gear (70);
a locking assembly (60) in geared engagement with the internal gear (70), the locking assembly being arranged, in use, to be engaged by the engagement end of the locking arm to automatically lock and unlock the spool (36) with respect to the spool housing (34), **characterised in that** the locking assembly (60), includes a pinion (62) in engagement with the internal gear (70), and a cam (64), wherein, in use, the cam (64) is arranged to be engaged by the engagement end of the locking arm to lock the spool (36) with respect to the spool housing.

2. A spool cartridge according to claim 1, in which the pinion (62) has an axis of rotation fixed relative to the spool housing but moveable relative to the spool (36) for controlling the dispensing of cutting line from the spool cartridge (26), the locking assembly (60) being arranged either to be in
a locked configuration, in which movement of the spool relative to the spool housing is locked or
a feed configuration in which the spool is able to rotate relative to its housing to thereby enable cutting line to be fed from the spool.

3. A spool cartridge according to claims 1 or 2, in which the ratio of the internal gear (70) and the pinion (62) is selected to ensure that a determined amount of line is released on each feed operation.

4. A spool cartridge according to any of claims 1 to 3, in which the cam (64) is fixedly coupled with the pinion (62) such that when the cam (64) is in the locked configuration the spool is fixed relative to the spool housing via interaction with the pinion.

5. A spool cartridge according to any of claims 1 to 4, in which the locking assembly is formed as an integrated component.

6. A spool cartridge according to any of claims 1 to 5, in which the internal gear (70) is formed as an integral part of the spool.

7. A spool cartridge according to claim 6, in which the gear is formed as a circular gear on a cylindrical inner wall of a recess (66) on the spool.

8. A spool cartridge according to any of claims 1 to 7, in which the openings (48; 50) in the spool housing extend in an axial direction for substantially the entire length of the spool housing.

9. A spool cartridge according to claims 1 or 2, in which the pinion (62) has an axis of rotation having one end movably mounted in a circular groove (78) formed within the recess (66) on the spool.

10. A spool cartridge according.to claims 1 or 2, in which the cam (64) comprises a disc having a shaped cam groove (98) formed therein, the arm (28) comprising a peg for following the groove.

11. A cutting head (20) for a string trimmer, the cutting head comprising:
a spool cartridge according to any of claims 1 to 10;
a weighted arm (28) having a cam follower for following the cam on the spool cartridge, the arm being arranged in use to be moveable between
a first position in which the cam follower locks movement of the spool with respect to the spool housing and
a second position in which the spool is able to rotate with respect to the spool housing.

12. A cutting head according to claim 11 comprising a movement assembly (110, 112) to enable the arm (28) to be moveable in the first position so as to vary the required movement between the first position and the second position.

13. A cutting head according to claim 12, in which the movement assembly comprises a helical control pin (110) coupled to the arm, and a control member (112) coupled to the helical control pin, whereby vertical movement of the control member (112) varies the angular position of the arm (28).

14. A string trimmer comprising an elongate shaft and a cutting head according to any of claims 11 to 13.

## Patentansprüche

1. Spulenkassette (26) zum Anordnen in einem Schneidkopf (20) eines Fadentrimmers während des Gebrauchs, wobei der Schneidkopf einen Arretierarm (28) mit einem Eingriffsende und einem Balanceende beinhaltet, wobei die Spulenkassette Folgendes umfasst:
ein Spulengehäuse (34) mit einer oder mehreren Öffnungen (48, 50) für die Schneidschnur,
eine Spule (36), die drehbar in das Spulengehäuse (34) montiert ist und eine darauf aufgewickelte Schneidschnur aufweist, wobei die Spule eine Innenzahnung (70) aufweist,
eine Arretieranordnung (60) in verzahnendem Eingriff mit der Innenzahnung (70), wobei die Arretieranordnung dafür angeordnet ist, während des Gebrauchs vom Eingriffsende des Arretierarms ergriffen zu werden, um die Spule im Verhältnis zum Spulengehäuse (34) automatisch zu arretieren oder zu lösen, **dadurch gekennzeichnet, dass** die Arretieranordnung (60) ein Ritzel (62) in Eingriff mit der Innenverzahnung (70) und einen Mitnehmer (64) beinhaltet, wobei der Mitnehmer während des Gebrauchs dafür angeordnet ist, vom Eingriffsende des Arretierarms ergriffen zu werden, um die Spule (36) im Verhältnis zum Spulengehäuse zu arretieren.

2. Spulenkassette nach Anspruch 1, wobei das Ritzel (62) eine Drehachse aufweist, die im Verhältnis zur Spule feststehend ist, zur Steuerung der Abgabe von Schneidschnur von der Spulenkassette (26) jedoch im Verhältnis zur Spule (36) beweglich ist, wobei die Arretieranordnung (60) dafür angeordnet ist, sich entweder in
einer arretierten Einstellung zu befinden, in der die Bewegung der Spule im Verhältnis zum Spulengehäuse arretiert ist, oder in
einer Abführungseinstellung zu befinden, in der die Spule in der Lage ist, sich im Verhältnis zu ihrem Gehäuse zu drehen, um dadurch zu ermöglichen, dass die Schneidschnur von der Spule abgeführt wird.

3. Spulenkassette nach Anspruch 1 oder 2, wobei das Verhältnis der Innenverzahnung (70) zum Ritzel (62) derart gewählt ist, dass sichergestellt ist, dass bei jedem Abführungsvorgang eine bestimmte Menge an Schnur freigegeben wird.

4. Spulenkassette nach einem der Ansprüche 1 bis 3, wobei der Mitnehmer (64) derart feststehend mit dem Ritzel (62) gekoppelt ist, dass die Spule über das Zusammenwirken mit dem Ritzel im Verhältnis zum Spulengehäuse feststehend ist, wenn sich der Mitnehmer (64) in der arretierten Einstellung befindet.

5. Spulenkassette nach einem der Ansprüche 1 bis 4, wobei die Arretieranordnung als eine ganzheitliche Komponente gebildet ist.

6. Spulenkassette nach einem der Ansprüche 1 bis 5, wobei die Innenverzahnung (70) als ein integraler Teil der Spule gebildet ist.

7. Spulenkassette nach Anspruch 6, wobei die Verzahnung als eine kreisförmige Verzahnung an einer zylindrischen Innenwand einer Vertiefung (66) in der Spule gebildet ist.

8. Spulenkassette nach einem der Ansprüche 1 bis 7, wobei sich die Öffnungen (48, 50) im Spulengehäuse in axialer Richtung über im Wesentlichen die ganze Länge des Spulengehäuses erstrecken.

9. Spulenkassette nach Anspruch 1 oder 2, wobei das Ritzel (62) eine Drehachse aufweist, deren eines Ende beweglich in eine kreisförmige Aussparung (78) montiert ist, die in der Vertiefung (66) der Spule gebildet ist.

10. Spulenkassette nach Anspruch 1 oder 2, wobei der Mitnehmer (64) eine Scheibe umfasst, die eine in ihr gebildete geformte Mitnehmeraussparung (98) aufweist, wobei der Arm (28) einen Zapfen umfasst, um der Aussparung zu folgen.

11. Schneidkopf (20) für einen Fadentrimmer, wobei der Schneidkopf Folgendes umfasst:
eine Spulenkassette nach einem der Ansprüche 1 bis 10,
einen gewichtsbelasteten Arm (28), der einen Mitnehmerbolzen aufweist, um dem Mitnehmer an der Spulenkassette zu folgen, wobei der Arm dafür angeordnet ist, während des Gebrauchs beweglich zu sein zwischen
einer ersten Position, in der der Mitnehmerbolzen die Bewegung der Spule im Verhältnis zum Spulengehäuse blockiert, und
einer zweiten Position, in der die Spule in der Lage ist, sich im Verhältnis zum Spulengehäuse zu drehen.

12. Schneidkopf nach Anspruch 11, eine Bewegungsanordnung (110, 112) umfassend, um den Arm (28) in die Lage zu versetzen, sich in die erste Position bewegen zu können, um die erforderliche Bewegung zwischen der ersten Position und der zweiten Position zu verändern.

13. Schneidkopf nach Anspruch 12, wobei die Bewegungsanordnung einen spiralförmigen Steuerstift (110) umfasst, der mit dem Arm gekoppelt ist, und ein Steuerelement (112), das mit dem spiralförmigen Steuerstift gekoppelt ist, wodurch die vertikale Bewegung des Steuerelements (112) die Winkelposition des Arms (28) verändert.

14. Fadentrimmer, einen länglichen Schaft und einen Schneidkopf nach einem der Ansprüche 11 bis 13 umfassend.

## Revendications

1. Cartouche de dévidoir (26) pour agencement en utilisation dans une tête de coupe (20) d'une tondeuse à fil, dans laquelle la tête de coupe inclut un bras bloquant (28) ayant une extrémité de mise en prise et une extrémité d'équilibre, la cartouche de dévidoir comprenant :
un logement de dévidoir (34) ayant une ou plusieurs ouvertures (48 ; 50) pour ligne de coupe ;
un dévidoir (36) monté en rotation au sein du logement de dévidoir (34) et sur lequel est enroulée une ligne de coupe, le dévidoir (36) comprenant un engrenage intérieur (70) ;
un ensemble bloquant (60) en prise engrenée avec l'engrenage intérieur (70), l'ensemble bloquant étant agencé, en utilisation, pour être mis en prise par l'extrémité de mise en prise du bras bloquant pour bloquer et débloquer automatiquement le dévidoir (36) par rapport au logement de dévidoir (34), **caractérisée en ce que** l'ensemble bloquant (60) inclut un pignon (62), en prise avec l'engrenage intérieur (70), et une came (64), où, en utilisation, la came (64) est agencée pour être mise en prise par l'extrémité de mise en prise du bras bloquant pour bloquer le dévidoir (36) par rapport au logement de dévidoir.

2. Cartouche de dévidoir selon la revendication 1, dans laquelle le pignon (62) a un axe de rotation fixe par rapport au logement de dévidoir mais mobile par rapport au dévidoir (36) pour contrôler la distribution de ligne de coupe depuis la cartouche de dévidoir (26), l'ensemble bloquant (60) étant agencé pour être
soit dans une configuration bloquée, dans laquelle un mouvement du dévidoir par rapport au logement de dévidoir est bloqué
soit une configuration d'amenée dans laquelle le dévidoir est apte à tourner par rapport à son logement pour ainsi permettre d'amener la ligne de coupe depuis le dévidoir.

3. Cartouche de dévidoir selon la revendication 1 ou 2, dans laquelle le rapport entre l'engrenage intérieur (70) et le pignon (62) est choisi pour garantir qu'une quantité de ligne prédéterminée soit libérée lors de chaque opération d'amenée.

4. Cartouche de dévidoir selon l'une quelconque des revendications 1 à 3, dans laquelle la came (64) est couplée fixement avec le pignon (62) de telle sorte que lorsque la came (64) est dans la configuration bloquée, le dévidoir est fixe par rapport au logement de dévidoir via une interaction avec le pignon.

5. Cartouche de dévidoir selon l'une quelconque des revendications 1 à 4, dans laquelle l'ensemble bloquant est formé comme un composant intégré.

6. Cartouche de dévidoir selon l'une quelconque des revendications 1 à 5, dans laquelle l'engrenage intérieur (70) est formé comme une partie solidaire du dévidoir.

7. Cartouche de dévidoir selon la revendication 6, dans laquelle l'engrenage est formé comme un engrenage circulaire sur une paroi interne cylindrique d'un évidement (66) sur le dévidoir.

8. Cartouche de dévidoir selon l'une quelconque des revendications 1 à 7, dans laquelle les ouvertures (48 ; 50) dans le logement de dévidoir s'étendent dans une direction axiale essentiellement sur la longueur entière du logement de dévidoir.

9. Cartouche de dévidoir selon la revendication 1 ou 2, dans laquelle le pignon (62) a un axe de rotation ayant une extrémité montée de façon mobile dans une rainure circulaire (78) formée au sein de l'évidement (66) sur le dévidoir.

10. Cartouche de dévidoir selon la revendication 1 ou 2, dans laquelle la came (64) comprend un disque au sein duquel est formée une rainure de came conformée (98), le bras (28) comprenant un goujon permettant de suivre la rainure.

11. Tête de coupe (20) pour une tondeuse à fil, la tête de coupe comprenant :
une cartouche de dévidoir selon l'une quelconque des revendications 1 à 10;
un bras lesté (28) ayant un galet suiveur permettant de suivre la came sur la cartouche de dévidoir, le bras étant agencé en utilisation pour être mobile entre
une première position dans laquelle le galet suiveur bloque le mouvement du dévidoir par rapport au logement de dévidoir et
une seconde position dans laquelle le dévidoir est apte à tourner par rapport au logement de dévidoir.

12. Tête de coupe selon la revendication 11, comprenant un ensemble mouvement (110, 112) permettant au bras (28) d'être mobile dans la première position de façon à faire varier le mouvement requis entre la première position et la seconde position.

13. Tête de coupe selon la revendication 12, dans laquelle l'ensemble mouvement comprend une goupille hélicoïdale de contrôle (110) couplée au bras, et un organe de contrôle (112) couplé à la goupille hélicoïdale de contrôle, moyennant quoi un mouvement vertical de l'organe de contrôle (112) fait varier la position angulaire du bras (28).

14. Tondeuse à fil comprenant un arbre allongé et une tête de coupe selon l'une quelconque des revendications 11 à 13.
